# EUROPEAN PATENT APPLICATION

(11) **EP 2 423 030 A2**
(43) Date of publication of application: **29.02.2012**
(21) Application number: 11174994.1
(22) Date of filing: 22.07.2011
(51) Int. Cl.: B60L 11/18

(54) **Transaction system which combines vehicle battery charging with other services**

(30) Priority: 23.08.2010 US 861250
(71) Applicant: NCR Corporation, Duluth, Georgia 30096 (US)
(72) Inventor: Allan, Douglas, Perth, Tayside PH2 0EZ (GB)
(74) Representative: MacLeod, Roderick William

(57) **Abstract**

A transaction system (10) which combines vehicle battery charging with other services. The transaction system (10) includes a vehicle battery charging system (14), a display (18), an input device (20), a payment peripheral (22), and a self-service computer for displaying choices for a battery charging service and at least one other service via the display (18), for recording a user selection of the battery charging service and the at least one other service via the input device (20), for obtaining payment for the battery charging service via the payment peripheral (22), for operating the vehicle battery charging system (14) to apply charging current to a vehicle battery (36), and for facilitating completion of the at least one other service.

## Description

The use of electric vehicles is on the increase. Electric or hybrid automobiles are now common. In some regions of the world, electric bikes are common. Congestion in urban areas and tighter environmental legislation makes electric vehicles more attractive.

Vehicle battery charging stations support growth of the electric vehicle industry. These charging stations supply electricity for a fee. Current charging times are measured in hours.

It would be desirable to provide a vehicle battery charging station that offers additional services to customers.

A transaction system which combines vehicle battery charging with other services is provided.

According to a first aspect of the invention there is provided a transaction system comprising: a vehicle battery charging system; self-service computer including: a display; an input device; a payment peripheral; and a processor for displaying choices for a battery charging service and at least one other service via the display, for recording a user selection of the battery charging service and the at least one other service via the input device, for obtaining payment for the battery charging service via the payment peripheral, for operating the vehicle battery charging system to apply charging current to a vehicle battery, and for facilitating completion of the at least one other service.

An example transaction method includes displaying choices for services, including a vehicle battery charging service and at least one other service by a self-service computer, recording customer selection of the vehicle battery charging service and the at least one other service by the self-service computer, obtaining payment for the battery charging service by the self-service computer, initiating charging of a vehicle battery by the self-service computer, and providing the at least one other service during the charging of the vehicle battery by the self-service computer.

According to a second aspect of the invention there is provided a transaction method comprising: displaying choices for services, including a vehicle battery charging service and at least one other service by a self-service computer; recording customer selection of the vehicle battery charging service and the at least one other service by the self-service computer; obtaining payment for the battery charging service by the self-service computer; initiating charging of a vehicle battery by the self-service computer; and providing the at least one other service during the charging of the vehicle battery by the self-service computer.

These and other aspects of the invention will be apparent from the following specific description, given by way of example, with reference to the accompanying drawings, in which:

Fig. 1 illustrates an example transaction system; and

Fig. 2 illustrates an example transaction method.

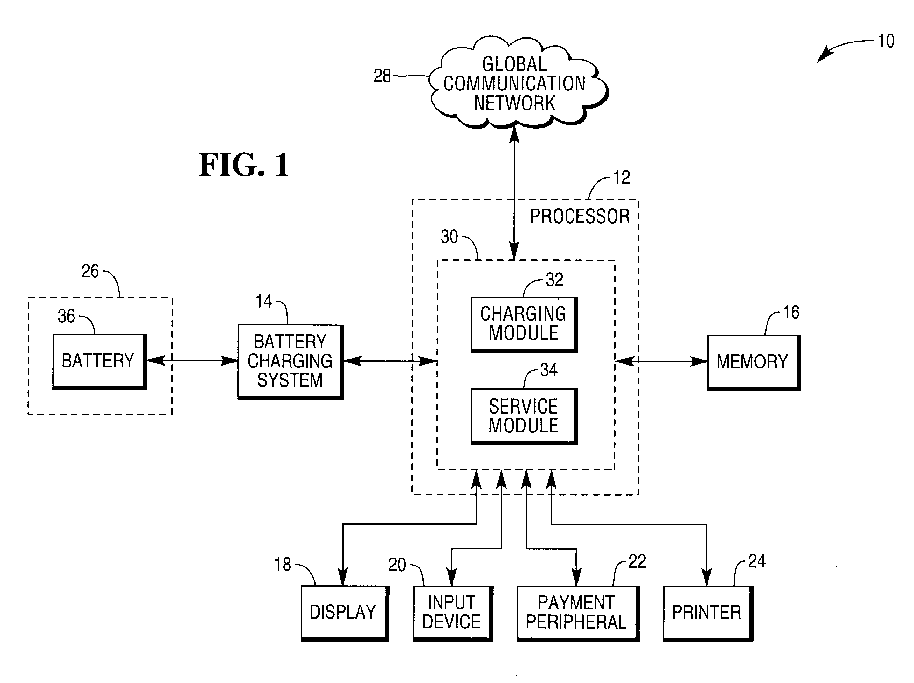

Referring now to Fig. 1, transaction system 10 includes processor 12, which executes transaction software 30 for controlling battery charging system 14 during a vehicle battery charging transaction and for providing other services to vehicle battery charging customers.

Transaction software 30 may be written as a web application which displays screen data in the form of web pages written using hypertext markup language (HTML), JavaScript, Java, or other suitable web page development language. The web pages may include hyperlinks for selecting subsequent web pages for display.

Processor 12 may execute web browser software for displaying the web pages. The web browser software may be configured for kiosk mode to hide web browser window toolbars and controls. Processor 12 may execute additional software to prevent a customer from accessing unauthorized web sites, accessing files, operating system software, or basic input-output system (BIOS) firmware, and to prevent the customer from rebooting.

Transaction software 30 includes charging module 32, which activates charging, monitors the state of charge, and provides an indication of the state of charge, such as percent charged and time remaining until full charge.

Transaction software 30 further includes one or more service modules 34, which offer services other than charging services to vehicle battery charging customers.

In an example embodiment, battery charging system 14 may include a power source and a power cable for connecting the power source to vehicle 26. The power source applies charging current from the power source to charge battery 36 (or batteries) in vehicle 26. Transaction software 30 provides battery charge status and records payment for charging and other services.

Electric vehicles may include any type of personal transportation, such as automobiles, bikes, scooters, and golf carts. Electric vehicles further include hybrid vehicles, such as gasoline-electric hybrids, in which electric power is not the only source of power for transportation.

Services offered in addition to charging services may provide assistance while battery 36 is charging. However, depending on the venue, there is no requirement to choose the battery charging service. In some venues, customers may select any of the other services without selecting the battery charging service.

Transaction software 30 may require payment for some services and not for others.

Based upon the venues where transaction system 10 is located and the services it offers, customers either leave or remain in their vehicles while the vehicle batteries 36 are charging. Charging may take hours.

Customers remaining in their vehicles may choose to work, watch movies or purchase other entertainment, shop online, or perform other tasks. Customers leaving their vehicles may choose to work, shop, run errands, or perform other tasks.

For example, transaction system 10 may display maps and provide directions to customers who wish to run errands while their batteries 36 are charging.

As another example, transaction system 10 may process bill payments for customers while their batteries 36 are charging.

As another example, transaction system 10 may process banking transactions for customers while their batteries 36 are charging.

As another example, transaction system 10 may provide entertainment while their batteries 36 are charging. Entertainment may include display or downloading or dispensing of content including but not limited to games, live or pre-recorded music, movies, television broadcasts, and radio broadcasts. Entertainment may also include tickets to local entertainment events for those customers who do not remain in their vehicles.

For example, customers may watch content via display 18. As an alternative, customers may download content to customer entertainment devices, such as cell phones. As yet another alternative, customer may receive content in a dispensed storage medium, such as a DVD. As yet another alternative, transaction system 10 may be located in a drive-in theater where content is displayed on a large outdoor screen.

As another example, transaction system 10 may provide promotional services while their batteries 36 are charging. For example, at shopping malls, leisure centers, and service centers, transaction system 10 may provide on screen advertising and display coupons and other special promotions to customers. Advertisers may purchase advertising time. Transaction software 30 may provide coupons or promotions to customers in paper or electronic form.

As another example, transaction system 10 may provide general internet access services while their batteries 36 are charging. Customers may use the internet access to accomplish any online need to obtain information or to complete an online transaction. For example, customers may check email, download photos, or search for information.

Services offered may be based upon the location of transaction system 10.

For example, transaction system 10 may be located at a parking site, such as a parking garage or parking meter. Transaction software 30 may process payment for both charging services and parking services.

As another example, transaction system 10 may be located at or near a transportation location, such as an airport, bus station, train station, pier, or rental car facility. "Park and ride" customers may plug in their vehicles, view transportation schedules (e.g., bus and train schedules), and obtain tickets. Transaction software 30 processes payment for both charging services and transportation services. Transaction software 30 may provide tickets or reservations in paper or electronic form.

As another example, transaction system 10 may be located at or near a restaurant. Transaction software 30 may process payment for charging services, obtain reservations, and display a menu of the restaurant. If the restaurant is a drive-in restaurant, transaction software 30 may process payment for food as well as charging services.

Combinations of any of the above examples based upon location and purpose are also envisioned.

Further, transaction system 10 may be part of or retrofitted to existing street objects, such as lamp posts and parking meters.

Processor 12 may be coupled to a global communication network 28, also known as the internet. The connection may be a wired or wireless connection.

Processor 12 executes an operating system, such as a Microsoft (trade mark) operating system, and is part of a computer system with memory 16, display 18, input device 20, payment peripheral 22, and printer 24.

Display 18 and input device 20 may be combined as a touch screen.

Payment peripheral 22 may include but not be limited to a coin acceptor, a currency acceptor, and a card reader.

Printer 24 may include a receipt printer, but may also print maps, tickets, or other documents, depending on the services offered by transaction system 10.

Processor 12 may be coupled to additional peripherals tailored to services being provided.

For example, if transaction system 10 provides banking services, transaction system 10 may include additional features and functions of a self-service banking machine known as an automated teller machine (ATM). The corresponding peripherals may include but not be limited to a cash money dispenser, a cash money acceptor (or cash money recycler), and a check imaging unit.

As another example, if transaction system 10 provides entertainment services, transaction system 10 may include additional features and functions of a self-service entertainment kiosk, such as a DVD dispensing kiosk or a digital download kiosk. The corresponding peripherals may include but not be limited to a media dispenser, a media identification label reader (radio frequency identification or barcode label reader), a media reader, a media writer, and a wireless media download peripheral.

As another example, if transaction system 10 provides tickets for transportation, entertainment, or other purposes, transaction system 10 may include a ticket dispensing peripheral.

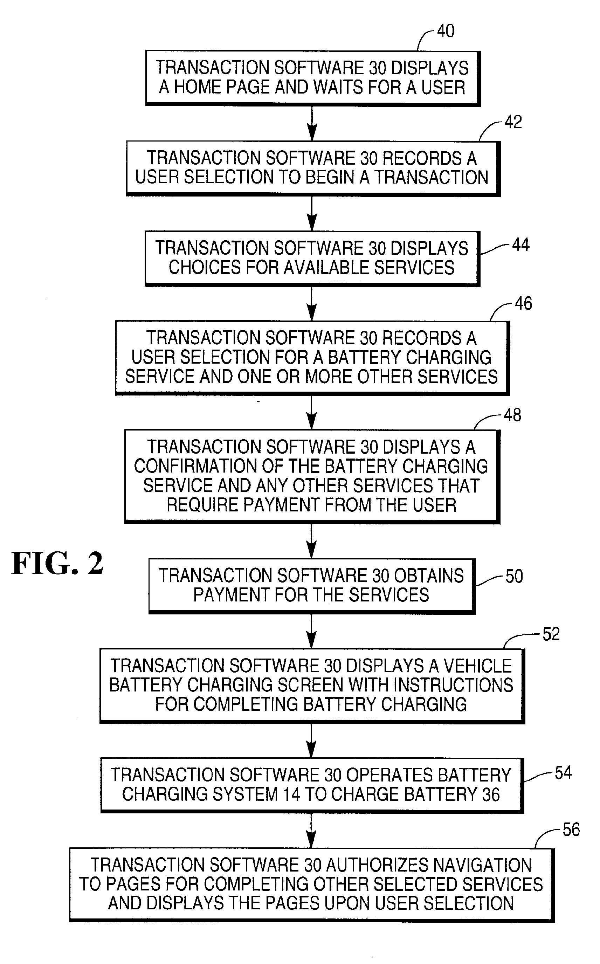

With reference to Fig. 2, an example transaction method is illustrated.

In step 40, transaction software 30 displays a first image or screen, which may include a start or home page. Transaction software 30 may also display an attract loop containing promotions when system 10 is not in use and waiting for a user.

In step 42, transaction software 30 records a user selection to begin a transaction.

In step 44, transaction software 30 displays another screen containing choices for available services, including a battery charging service. The screen may include links to subsequent pages for completing ordering of individual services.

In step 46, transaction software 30 records a user selection for a battery charging service and one or more other services.

For example, the user may choose a selection for displaying local restaurants, directions to the restaurants, and any special coupons or other promotions offered by the restaurants.

In step 48, transaction software 30 displays a second screen, confirming the vehicle battery charging service and any other services that require payment from the user.

In step 50, transaction software 30 obtains payment for the services.

In step 52, transaction software 30 displays a vehicle battery charging screen with instructions for completing battery charging.

In step 54, transaction software 30 operates battery charging system 14 to charge battery 36.

In step 56, transaction software 30 authorizes navigation to pages for completing other selected services and displays the pages upon user selection.

Transaction software 30 may include battery status and time remaining as part of the other pages. Transaction software 30 also includes a link to selecting additional services.

Transaction software 30 returns to the start page after all services have been completed. System 10 is then ready for use by another user.

Although particular reference has been made to certain embodiments, variations and modifications are also envisioned within the scope of the following claims.

## Claims

1. A transaction system (10) comprising:
a vehicle battery charging system (14);
self-service computer including
a display (18);
an input device (20);
a payment peripheral (22); and
a processor (12) for displaying choices for a battery charging service and at least one other service via the display (18), for recording a user selection of the battery charging service and the at least one other service via the input device (20), for obtaining payment for the battery charging service via the payment peripheral (22), for operating the vehicle battery charging system to apply charging current to a vehicle battery (36), and for facilitating completion of the at least one other service.

2. The system of claim 1, wherein the processor (12) is also operable to obtain payment for the at least one other service.

3. The system of claim 1 or 2, wherein the at least one other service comprises displaying maps and providing directions to a vehicle battery charging customer.

4. The system of any preceding claim, wherein the at least one other service comprises processing bill payments for a vehicle battery charging customer.

5. The system of any preceding claim, wherein the at least one other service comprises processing banking transactions for a vehicle battery charging customer.

6. The system of any preceding claim, wherein the at least one other service comprises providing entertainment to a vehicle battery charging customer.

7. The system of any preceding claim, wherein the at least one other service comprises providing promotions to a vehicle battery charging customer.

8. The system of any preceding claim, wherein the at least one other service comprises providing internet access to a vehicle battery charging customer.

9. The system of any preceding claim, wherein the self-service computer and the vehicle battery charging system (14) are located at a parking site.

10. The system of any preceding claim, wherein the self-service computer and the vehicle battery charging system (14) are located at a transportation site.

11. The system of any preceding claim, wherein the self-service computer and the vehicle battery charging system (14) are located at a restaurant.

12. A transaction method comprising:
displaying choices for services, including a vehicle battery charging service and at least one other service by a self-service computer;
recording customer selection of the vehicle battery charging service and the at least one other service by the self-service computer;
obtaining payment for the battery charging service by the self-service computer;
initiating charging of a vehicle battery by the self-service computer; and
providing the at least one other service during the charging of the vehicle battery by the self-service computer.

13. The method of claim 12, wherein the providing step comprises providing internet access.

14. The method of claim 12 or 13, further comprising obtaining payment for the at least one other service.
